Europäisches Patentamt

**European Patent Office**

Office européen des brevets

(19)

(11) Publication number: **0 196 499**
**B1**

## EUROPEAN PATENT SPECIFICATION

(12)

(45) Date of publication of patent specification: **22.06.88**

(21) Application number: **86103123.5**

(22) Date of filing: **08.03.86**

(51) Int. Cl.⁴: **B 32 B 27/30,** B 32 B 27/32, C 08 L 27/08, F 24 D 3/14, A 61 J 1/00 // (C08L27/08, 23:28)

(54) Articles having a flexible gas barrier layer and process for preparation.

(30) Priority: **14.03.85 CH 1142/85**

(43) Date of publication of application:
**08.10.86 Bulletin 86/41**

(45) Publication of the grant of the patent:
**22.06.88 Bulletin 88/25**

(84) Designated Contracting States:
**AT BE CH DE FR GB IT LI NL SE**

(56) References cited:
**US-A-4 144 289**

**POLYMERIC MATERIALS SCIENCE AND ENGINEERING, vol. 52, 1985, pages 129-133, Washington, US; P.T. DELASSUS: "Blends of vinylidene chloride copolymers and chlorinated polyethylene"**

(73) Proprietor: **THE DOW CHEMICAL COMPANY**
**2030 Dow Center Abbott Road P.O. Box 1967 Midland, MI 48640 (US)**

(72) Inventor: **Damen, Julien Helene Joseph Marie Im Leeman 8**
**CH-8805 Richardswil (CH)**
Inventor: **Zuercher, Karl Im Leeman 11**
**CH-8805 Richterswil (CH)**
Inventor: **Quack, Wolfgang Mozartstrasse 15**
**D-4020 Mettmann (DE)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

## 0 196 499

**Description**

The present invention relates to articles having a flexible gas barrier layer and processes for preparing such articles.

Plastic articles of manufacture are generally very permeable to gases, such as oxygen. This characteristic is particularly disadvantageous for the contents of the hollow bodies of plastic material because they can become oxidized, due to oxygen diffusion. This particularly applies to solids and liquids which are stored in bottles or other containers, as well as to flowing liquids contained in a conduit, such as pipes.

Of particular importance among the plastic articles with circulating liquids are floor heating systems with heating pipes of synthetic material by which heated water is conducted in a circuit. The oxygen permeability of such pipes which generally consists of polyethylene is so large that sufficient amounts of oxygen diffuse into the water conducted in the circuit to cause severe corrosion of the metal parts of the system, e.g., the boiler and pump.

It can be assumed that the amount of oxygen diffusing through a synthetic pipe system of a house whith about 500 meter of the plastic piping causes a metal erosion of about 300 g iron yearly, whereby about 400 g rust sludge are formed. As this is a considerable problem, various trials have been made to lessen the oxygen diffusion through plastic articles, in particular plastic pipes for floor heating.

A good reduction in such oxygen diffusion is provided by completely encasing the plastic pipe with a metal, e.g., an aluminum foil. Unfortunately, in practice, use of a thin metal coating over the plastic pipe creates considerable installation problems and high costs. It has also been suggested to provide the plastic pipes with a coating of an oxygen barrier by sealing the plastic pipe in at least a three-layer, normally a five layer, synthetic laminate film whereby the laminated comprises a barrier layer for oxygen, an adhesive agent and a sealable layer. Materials suggested for the barrier layer include polyvinyl alcohol, vinyl alcohol-ethylene copolymers or polyacrylonitrile. Unfortunately, this sealing also involves high costs and much work. Furthermore, the sealing seam is a weak point in the piping system. In addition, the ends of the pipes are susceptible to damage, especially if the barrier layers are water soluble, susceptible to humidity or damaged and if the pipes come into contact with water.

Generally known coating compositions are vinylidene chloride copolymers which mainly contain polymerized vinylidene chloride and minor amounts of copolymerized comonomers, e.g., vinyl chloride. Intact coating of such vinylidene chloride copolymers provide good barrier properties against gas diffusion. However, the coatings are very brittle. The gas permeability is also greatly increased at brittle spots. In the case of floor heating pipes, it is particularly important that the coating be flexible.

Trials have been run to make the vinylidene chloride copolymers more flexible by the addition of plasticizers, however, the results were not satisfactory. Due to the addition of the plasticizer, the gas permeability of a coating prepared from a modified vinylidene chloride copolymer was undesirably increased.

One suggestion relates to a coated plastic pipe for floor heating. The coating is said to be elastic and to provide a barrier against oxygen diffusion. Such a coated pipe of synthetic material is described in DE—OS 3312058 as PVDC and PU at a ratio of 9:1 is said to be a preferred coating material. It is stated that non-coated pipe shows an oxygen permeability of 0.431 ml per hour and that the same pipe coated with a nearly 0.25 mm thick coating of a mixture of PVDC and PU at a ratio of 9:1 shows an oxygen permeability of 0.00158 ml per hour.

Good gas and odour barrier property is also required for films which are used for producing for example pouches, bags or other containers. This is particularly desirable for medical use such as surgical drainage pouches, known as ostomy bags which permit drainage from parts of the body and are temporarily worn by a patient. Films which comprise at least one layer of vinylidene chloride copolymers having predominate amounts of vinylidene chloride in combination with at least one layer of an oxygen permeable plastic material have sufficient gas barrier property but are often stiff and rustle and are therefore embarrassing to the wearer. Addition of plasticisers to the vinylidene chloride copolymers for reducing the noise level of the films increases the gas permeability of the films undesirably.

Therefore, it remains still desirable to decrease the gas permeability of oxygen permeable articles of plastic material without substantially decreasing their flexibility.

Accordingly, an object of the present invention is to provide articles of plastic material with decreased gas, for example oxygen permeability but sufficient flexibility for their end-use applications as well as processes for producing them.

According to the present invention, this object is attained by a plastic article of at least two layers wherein a first layer (1) is an oxygen permeable plastic material and a second layer (2) comprises (A) from 65 to 95 weight percent of a thermoplastic vinylidene chloride copolymer and (B) from 35 to 5 weight percent of a thermoplastic halogenated polymer of one or more types of non-aromatic ethylenically unsaturated hydrocarbons of 2 to 12 carbon atoms, based on the total weight of (A) and (B).

From the Japanese patent application 77 JP—142368 (publication no. J54074848—A) compositions are known which contain a vinylidene chloride copolymer and a chlorinated ethylene/vinylester copolymer. According to the Japanese patent application, these compositions are however used for producing

2

transparent molds. The ethylene/vinylester coplymers are employed for increasing the heat and light stability of the molds.

From U.S. patent 4,144,289, DE—A 27 49 672 and Chem. Abstr., vol. 90, 1979, no. 105060f it is known that moulded parts like films can be prepared from blends of vinylidene chloride copolymers and chlorinated ethylene/vinyl ester copolymers. The films have good gas barrier properties and are transparent. However, it is not known from these references to produce plastic articles of at least two layers wherein one layer is produced of such blends. Plastic articles which have at least two, different plastic layers of which one is produced of the mentioned blends of vinylidene chloride copolymers and chlorinated ethylene/vinyl ester copolymer do not always have the desired properties like sufficient flexibility or tear strength for some applications.

The second layer (2) has good gas, for example, oxygen barrier properties and high flexibility. A plastic article within the scope of the present invention has good oxygen barrier properties. Furthermore, the plastic articles of the present invention has good barrier, properties against other gases and odour. The flexibility of the plastic article is mainly determined by the flexibility of layer (1).

Furthermore, the invention relates to first process for producing the plastic article of the present invention by coextruding at least a first layer (1) of an oxygen permeable plastic material and a second layer (2) comprising (A) from 65 to 95 weight percent of a thermoplastic vinylidene chloride copolymer and (B) from 35 to 5 weight percent of a thermoplastic halogenated polymer of one or more types on non-aromatic ethylenically unsaturated hydrocarbons of 2 to 12 carbon atoms, based on the total weight of (A) and (B).

Furthermore, the invention relates to a second process for producing the plastic article of the present invention by coating or laminating a base plastic article comprising a first layer (1) of an oxygen permeable plastic material with at least a second layer (2) comprising (A) from 65 to 95 weight percent of a thermoplastic vinylidene chloride copolymer and (B) from 35 to 5 weight percent of a thermoplastic halogenated polymer of one or more types of non-aromatic ethylenically unsaturated hydrocarbons of 2 to 12 carbon atoms, based on the total weight of (A) and (B).

Layer (2) of the plastic article of the invention contains (A) from 65 to 95 weight percent of a thermoplastic vinylidene chloride copolymer, based on the total weight of (A) and (B). Layer (2) may also comprise a mixture of different vinylidene chloride copolymers. However, the total amount of the vinylidene chloride copolymers (A) must yield from 65 to 95 weight percent, based on the total weight of (A) and (B).

Additionally, layer (2) contains (B) from 35 to 5 weight percent of a thermoplastic halogenated polymer of one or more types of non-aromatic ethylenically unsaturated hydrocarbons of 2 to 12 carbon atoms, based on the total weight of (A) and. (B). Layer (2) may also contain a mixture of different halogenated polymers (B); however, their total amount must yield from 35 to 5 weight percent, based on the total weight of (A) and (B).

In a preferred embodiment, layer (2) contains from 70, most preferably from 75, weight percent to 95, most preferably to 90, weight percent of the vinylidene chloride copolymer (A) and from 30, most preferably from 25, weight percent to 5, most preferably to 10, weight percent of the halogenated polymer of one or more types of non-aromatic ethylenically unsaturated hydrocarbons of 2 to 12 carbon atoms (B), based on the total weight of (A) and (B).

The thermoplastic vinylidene chloride copolymer (A) present in layer (2) comprises as polymerized comonomer for example radically polymerizable, ethylenically unsaturated monomers which preferably facilitate the thermoplastic processing of the copolymer but affect the crystallinity as little as possible. Such comonomers are, for example, vinyl chloride, vinylacetate, acrylonitrile, alkyl acrylates like methyl acrylate, methyl methacrylate and esters of acrylic or methacrylic acid with higher alcohols. The vinylidenechloride copolymer (A) can also be a graft copolymer. Useful polymers for preparing a vinylidene chloride graft copolymer are e.g., polybutadiene, polyisoprene or polychlorobutadiene. Vinyl chloride and methyl acrylate are the most preferred comonomers.

Beside binary copolymers, vinylidene chloride copolymers (A) comprising more than one copolymerized comonomer are useful. Preferred ternary copolymers are those which comprise copolymerized vinylidene chloride, vinyl chloride and methyl acrylate.

A preferred vinylidene chloride copolymer (A) comprises from 65, most preferably from 70, weight percent to 91, most preferably to 85, weight percent polymerized vinylidene chloride and from 35, most preferably from 30, weight percent to 9, most preferably to 15, weight percent polymerized vinyl chloride.

Another preferred embodiment of the vinylidene chloride copolymer (A) comprises from 80, most preferably from 90, weight percent to 96, most preferably to 95, weight percent vinylidene chloride and from 20, most preferably from 10, weight percent to 4, most preferably to 5, weight percent of a polymerized alkyl acrylate, most preferably methyl acrylate.

All weight percentages relating to the composition of the polymers are based on the total weight of the polymer.

The average molecular weight of the vinylidene chloride copolymer (A) is preferably from 50000, most preferably from 70000, to 150000, most preferably to 130000. The average molecular weight is a weight average value.

Among the halogenated polymers of one or more types of non-aromatic ethyleneically unsaturated hydrocarbons of 2 to 12 carbon atoms (B), the fluorinated and chlorinated polymers are particularly useful. The chlorinated polymers (B) are preferred.

3

Useful chlorinated polymers (B) are e.g., described in U.S. patent specification 4,376,799.

The average chlorine content of the chlorinated polymers (B) is preferably from 25, most preferably from 35, weight percent to 50, most preferably to 48, weight percent, based on the total weight of the chlorinated polymers (B).

Useful halogenated, preferably chlorinated, polymers of one or more types of non-aromatic ethylenically unsaturated hydrocarbons of 2 to 12 carbon atoms (B) are halogenated homo- or copolymers of said hydrocarbons. Appropriate halogenated homopolymers (B) are e.g., halogenated polymerized $C_{2-4}$-olefins, preferably polyethylene, polypropylene or polybutene wherein the butene units preferably are unbranched. Chlorinated polyethylene is particularly preferred. Useful halogenated copolymers (B) preferably contain major amounts of the above-mentioned $C_{2-4}$-olefins, most preferably ethylene. The most preferred copolymers (B) contain at least 80, preferably at least 90, weight percent of one of these $C_{2-4}$-olefins. Useful comonomers are non-aromatic ethylenically unsaturated hydrocarbons of 2 to 12, preferably of 2 to 8, carbon atoms, preferably propylene, 1-butene, 2-butene and 1-octene; cycloaliphatic olefins of 2 to 12 carbon atoms, e.g., 1,5-cyclopentene or cyclooctadiene; and conjugated diolefins of 2 to 12 carbon atoms like butadiene. The halogenated polymers (B) can comprise one or more copolymerized comonomers.

Chlorinated ethylene homo- or copolymers are the most preferred halogenated polymers (B). The most preferred examples thereof are chlorinated ethylene/propylene, ethylene/1-butene, ethylene/2-butene and ethylene/1-octene copolymers.

The crystallinity of the chlorinated ethylene homo- or copolymers (measured according to differential scanning calorimeter) is generally less than 30 percent, most preferably less than 10 percent.

The crystallinity is determined by first keeping a sample, in a differential scanning calorimeter, at 150°C for 5 minutes, subsequently cooling it off to 50°C at a cooling rate of 5°C per minute and heating it up again to 150°C at a rate of 5°C per minute. During this heating up the melting heat is measured. The crystallinity is determined by means of the following formula:

$$\text{crystallinity (\%)} = \frac{\text{melting heat measured (J/g)}}{\text{theoretical melting heat of 100\% crystalline polyethylene (J/g)}} \times 100\%$$

The effective melt viscosity of the chlorinated ethylene homo- or copolymer, measured at 190°C at a shear rate of $145s^{-1}$ is generally from 500, preferably from 1500, Pa·s to 3000, preferably to 2500 Pa·s.

The chlorinated ethylene homo- or copolymers (B) can be produced according to known processes by chlorination of the ethylene homo- or copolymers in solution, suspension or gas phase. For this purpose, we refer to the Dutch published patent application 7311780 and 7701599. The density of the ethylene homo- or copolymers to be chlorinated is preferably from 0.91 to 0.965 g/ml, most preferably from 0.935 to 0.965 g/ml.

The oxygen permeable plastic material of the first layer (1) in the plastic article can be any plastic material, depending on the intended use of the plastic article. Preferred materials are polyolefins of 2 to 12 carbon atoms per olefin molecule, for example, ethylene homo- and copolymers, propylene copolymers and butene homopolymers. When the first layer (1) is a propylene copolymer, propylene/ethylene copolymers having predominant amounts of propylene are preferred. The most preferred ethylene polymers of layer (1) are the high, medium and low density homopolymers of ethylene and copolymers of ethylene in predominant amount with minor amounts (generally up to 20, preferably 5 to 20, percent by weight) of other copolymerizable aliphatic alpha-olefins having from 3 to 18 carbon atoms and mixtures and blends thereof. Methods for the preparation of such ethylene polymers are well known in the art, for example, as taught by Schildknecht, Polymer Processes, Vol. X (1956) or in Chem. Eng. News, 5 December 1977. Preferred ethylene polymers are linear low density polyethylene wherein ethylene has been polymerized with minor amounts of alpha, beta-ethylenically unsaturated alkenes having from 3 to 12, preferbly 4 to 8, carbon atoms per alkene molecule. The linear low density ethylene copolymers contain preferably minor amounts (generally up to 20 percent, preferably from 5 to 20 percent by weight) of at least one alpha-olefin comonomer selected from the group consisting of propylene, 1-butene, 1-isobutene, 4-methyl-1-pentene, 1-pentene, 1-isopentene, 1-hexene, 1-isohexene, 1-heptene, 1-isophetene, 1-octene, 1-isooctene, 1-nonene, 1-isononene, 1-decene and 1-isodecene, 1-octene, 1-hexene, 4-methyl-1-pentene and 1-butene are the most preferred comonomers. The amount of comonomers used should generally be enough to result in polymer densities in the low range of about 0.90 to 0.94 g/ml. The copolymers generally have a high molecular weight and have a melt index (melt flow) in the range of 0.1 to 30°C/min as measured by ASTM—D—1238 condition (E). The polyethylene can also be a copolymer of ethylene and a minor amount, for example, up to 20 weight percent, preferably from 5 to 20 weight percent, of a diene; cycloaliphatic olefin, e.g., 1,5-cyclopentene or cyclooctadiene; a substituted olefin, e.g., a monoethylenically unsaturated carboxylic acid or one of its alkyl esters such as, for example, vinyl acetate, a conjugated diolefin like butadiene; or an alkenyl aromatic compound such as styrene or its derivatives.

When the plastic articles of the present invention are pipes for floor heating, the above mentioned linear low density polyethylenes, particularly ethylene/1-octene copolymers, are the preferred materials of layer (1). When the plastic articles are films, for example, useful for producing containers for medical applications, a low density polyethylene or a blend of a chlorinated polyethylene with a low or medium density polyethylene is the preferred material of layer (1). The chlorinated polyethylene preferably employed is described above. Further useful layers (2) prepared of blends of a chlorinated polyethylene with a low or medium density polyethylene are described in U.S. patent 4,376,799 (therein called "skin" layer) of which the teaching relating to these layers is incorporated herein by reference).

The layers (1) and (2) of the plastic article can comprise common additives, e.g., stabilizers, dyes, lubricants and anti-oxidants. Layer (2) provides the plastic article of the present invention with excellent gas barrier properties.

Before producing the plastic article of the present invention, the thermoplastic vinylidene chloride copolymers (A) and the thermoplastic halogenated polymers of one or more types of non-aromatic ethylenically unsaturated hydrocarbons of 2 to 12 carbon atoms (B) can be blended in any simple manner, e.g., by tumble mixing or high speed blending. The applicaton of the layer (2) which prevents gas, particularly oxygen, diffusion is carried out preferably from a melt of the vinylidene chloride copolymer(s) (A) and the halogenated polymer(s) (B).

According to the processes of the present invention for producing the plastic article, the above mentioned layers can be coextruded or a base plastic article comprising the first layer (1) can be coated or laminated with the second layer (2). Optionally, (an) additional layer(s), for example a skin layer (3), can be coextruded with layers (1) and (2) or the optional layer(s) can be used together with or subsequently to layer (2) to coat or laminate a base plastic article comprising layer (1). An adhesive can be applied between the base plastic article of layer (1) and the gas, particularly oxygen, diffusion barrier layer (2) and/or between layer (2) and the skin layer (3).

Coextrusion is particularly preferred for film production by known methods like flat die coextrusion or blow coextrusion.

For coating or laminating plastic articles produced of layer (1) with layer (2) and with optional additional layers, known coating means are suitable, e.g., an extruder with a cross head ring die is useful for coating plastic pipes and similar hollow plastic bodies. In general, the temperatures of the melt during the extrusion coating are 140 to 109°C, preferably 150 to 180°C. The optimum extrusion conditions of extrusion equipment can be determined by routine tests.

The preferred thickness of layer (2) depends on the intended shape and use of the plastic article of the invention. When the plastic article is a pipe for floor heating, in general, the thickness of the layer (2) should be 20 to 300 μm, preferably 80 to 200 μm, in order to obtain a sufficient degree of impermeability against oxygen diffusion. When the plastic article of the present invention is, for example, a container or a film for medical applications such as ostomy pouches or bags, the thickness of layer (2) should generally be between 5 and 30 μm, preferably between 10 and 20 μm.

To prevent blocking and mechanical damage of the coated pipes or other plastic articles of the present invention, it is advantageous to cover the gas, particularly oxygen, diffusion barrier layer (2) with a skin layer (3). The skin layer (3) is applied preferably with a second extruder, for example, with a cross head ring die or a flat die after the application of the barrier layer (2). Useful materials for the skin layer (3) are thermoplastic polymers used for the layer (1), depending on the intended use for the plastic article of the present invention. For example, when the plastic articles of the present invention are pipes for floor heating, one of the above mentioned linear low density polyethylenes, particularly an ethylene/1-octene copolymer is the preferred material of the skin layer (3). When the plastic article of the present invention is a film, for example useful for producing containers for medical applications, the material of the skin layer (3) is preferably a low density polyethylene or a chlorinated polyethylene blended with a low or medium density polyethylene described above relating to layer (1).

The gas, particularly oxygen, diffusion barrier layer (2), the skin layer (3) and the optional adhesive layer can also be applied to the base plastic article of layer (1) in a one-step coextrusion process. Plastic articles produced in that way have an excellent resistance to gas, particularly oxygen, diffusion. Plastic pipes of at least two layers according to the invention do not involve installation difficulties due to their flexibility. Beside seamless coatings, films can be prepared from the material of layer (2) in the known manner which provide gas, particularly oxygen, diffusion barrier articles by jacketing (casing) plastic articles of layer (1) and subsequent sealing.

Desired mechanical properties of the plastic articles of the present invention, for example hollow bodies such as pipes, in particular for floor heating, are, for example, high tensile strength, high extensibility and high elasticity. Accordingly, the first layer (1) of such a plastic article preferably has these properties. The mechanical properties of some oxygen permeable materials of layer (1), e.g., of ethylene homo- or copolymers, can be improved by cross-linking. The cross-linking treatment can be carried out by chemical or radiation treatment, e.g., by ultrasonics, UV radiation or microwaves, preferably electron beams or gamma rays. Generally, the base plastic article produced of layer (1), for example, a pipe, is treated. Such radiation treatments are known to those skilled in the art. After the radiation treatment step, the base plastic article of layer (1) may be coated with the second layer (2). In the practice of the pipe production, the production and the coating of the pipes can be carried out at the same place. However, the radiation treatment of the pipe material is generally carried out elsewhere. If the base pipes are coated with layer (2) after the radiation treatment, additional transportation from one place to the other and additional

5

rolling up and unrolling of the plastic pipes are required. This additional work could be avoided if the cross-linking treatment were only carried out after coating the base pipe of layer (1) with layer (2).

A cross-linking treatment after coating however, requires that layer (2) survives the treatment, e.g. by corpuscular rays like electron beams, without deterioration of the mechanical properties of layer (2) to an undesired extent. In particular, layer (2) must be of such quality that it does not become brittle due to the radiation treatment of the base pipes.

Surprisingly, it has now been found that the material of layer (2) survives without substantial damage a radiation treatment, e.g., by electron beams, as is generally applied for cross-linking ethylene homo- or copolymers used for base hollow bodies of layer (1), for example, plastic pipes for floor heating.

The appropriate energy to be applied to the base pipes produced of layer (1) depend among other things on the type of pipe material and on the thickness of the pipe. Cross-linking aids, e.g., described by Donald E. Malloy, Jr. in Plastics Engineering, pp. 33—36, December 1984, can be used for lowering the required radiation dose. Appropriate radiation doses are generally 20 to 800 kGy (2 to 80 MRad), preferably 50 to 500 kGy (5 to 50 MRad), most preferably 80 to 200 kGy (8 to 80 MRad). A dose of 100 to 150 kGy (10 to 15 MRad) is particularly preferred.

Surprisingly, it has also been found that the oxygen permeability of layer (2) in the plastic article of the present invention is after such a radiation treatment, e.g., by electron beam radiation, unexpectedly lower than before the radiation treatment.

If layer (1) of the base plastic article is cross-linked it is recommended, in a preferred embodiment of the process according to the invention, to coextrude, coat or laminate the base plastic article of layer (1) with layer (2) before the cross-linking treatment.

Besides pipes, particularly for floor heating, or other plastic articles like bottles, canisters, barrels or other containers, the plastic articles of the present invention can also be films, for example, useful for medical applications or pouches, bags or containers for medical applications.

In the following examples, the invention will be explained further. All statements of amounts and percentages are based on weight, unless otherwise stated. The examples should not be construed to limit the scope of the invention.

The elongation at break (ultimate elongation), the elastic modulus and the tensile strength are measured according to DIN 53571.

The measuring of the oxygen diffusion is performed according to ASTM 1434 (isostatic measuring principle). For measuring the oxygen permeability air at 1 bar pressure is used.

## Example 1

Example 1 illustrates the effect of a radiation treatment on the material of layer (2).

A mixture (1) is prepared of (A) 80 percent based on the total weight of (A) and (B), vinylidene chloride copolymer; (B) 20 percent, based on the total weight of (A) and (B), chlorinated polyethylene; and (C) the additives stated below.

The vinylidene chloride copolymer (A) employed is a copolymer of 72 weight percent vinylidene chloride and 28 weight percent vinyl chloride which has a weight average molecular weight of 127000.

Before the vinylidene chloride copolymer (A) is mixed with the chlorinated polyethylene (B), 0.5 percent plasticizer and 1 percent epoxidized soyabean oil as a stabilizer, based on the weight of (A), are admixed to the vinylidene chloride (A).

The chlorinated polyethylene (B) employed is a polyethylene designated by XO 2243.51 which is commercially available from the Dow Chemical Company. The chlorine content of this polyethylene is 46 weight percent, its residual crystallinity 2 percent and its viscosity 2100 Pa·s.

0.2 percent epoxidized soyabean oil and 0.4 percent calcium stearate, based on the total weight of (A) and (B), are added to the mixture produced of the compounds stated above.

Starting from the produced mixture (1), a film is produced with the aid of an extruder with one screw which extruder is equipped with a powder screw of a screw diameter of 31.75 mm, a length to diameter ratio of 20 and a compression ratio of 3.2 and with a flat die, equipped with an adapter feedback for the coextrusion of 5-layered composites.

When extruding the above mentioned mixture, the extruder parameters are the following: the catchment area of the extruder is cooled with water, the heating of the extrusion cylinder is adjusted to 140°C in the catchment area and is increased to 155°C at the top of the extruder. The film is produced inside a 5-layered composite which layers are manually separable. The 5-layered composite consists of an impact resistant polystyrene (layer A)/polyethylene homopolymer (layer B)/mentioned mixture (1) (layer C)/ polyethylene homopolymer (layer D)/impact resistant polystyrene (layer E), whereby layers A and E (impact resistant polystyrene), layers B and D (polyethylene homopolymer) and layer C (mixture (1)) are molten in separate extruders before the molten masses are combined in the adapter feedback to the mentioned 5-layered composite, are flowed jointly through the die and are cooled in a calander with three rolls. The highly impact resistant polystyrene is a product designated as HIPS 461 and the polyethylene homopolymer is a product designated as LDPE 740 which products both are commercially available from The Dow Chemical Company.

When extruding the impact resistant polystyrene and the polyethylene homopolymer the extruder is heated to a temperature of from 150 to 190°C. The adapter feedblock and the flat die are heated to 190°C.

After the 5-layered composite has been produced, the film consisting of the above mentioned mixture (1) is manually removed from the 5-layered composite (consisting of impact resistant polystyrene/polyethylene homopolymer/mixture (1)/polyethyene homopolymer/impact resistant polystyrene).

The thickness of the film of mixture (1) is 180 µm.

Example 1A illustrates the physical properties and the oxygen permeability of a film which is produced as described above.

Example 1B illustrates the physical properties and the oxygen permeability of the same film, however after a treatment of electron beam radiation of 125 kGy is applied. Such a treatment is usually applied to polyethylene pipes for cross-linking the polyethylene.

| Example | 1A | 1B |
|---|---|---|
| Ultimate elongation (%) | 320 | 280 |
| Elastic modulus (N/mm²) | 410 | 395 |
| Tensile strength (N/mm²) | 19.1 | 18.7 |
| Oxygen permeability (ml/m² × 24 h at 210 mbar $O_2$) | 0.45 | 0.10 |

Example 1 shows that the physical properties of the produced film are generally not significantly affected by the radiation treatment and moreover that the oxygen permeability ability is reduced after radiation treatment.

Example 2

A pipe useful for floor heating with a total diameter of 20 mm and a wall thickness of 2 mm consisting of an ethylene/1-octene copolymer produced by solution process, cross-linked by electron rays having a melting index of 1 and a density of 0.930 g/ml is coated in an extruder with a ring die with a seamless coating of a mixture (1) described in example 1.

During extrusion, the temperature profile is 140 to 175°C. The average thickness of the coating, according to invention, on the pipe is 110 µm.

The resultant oxygen permeability of the pipe is considerably diminished by the coating. The following comparison of a pipe with an average layer thickness of 110 µm with an uncoated pipe reveals the following values:

Coated pipe: 0.0117 ml $O_2$/m pipe/24 h/101 325 Pa at 23°C and 50% room humidity

Uncoated pipe: 0.591 ml $O_2$/m pipe/24 h/101 325 Pa at 23°C and 50% room humidity

Accordingly, the oxygen permeability of the coated pipe is only 1.98 volume percent of that of an uncoated pipe.

The coated pipe is flexible and can be easily installed in floor heating systems.

**Claims**

1. A plastic article of at least two layers wherein a first layer (1) is an oxygen permeable plastic material and a second layer (2) comprises (A) from 65 to 95 weight percent of a thermoplastic vinylidene chloride copolymer and (B) from 35 to 5 weight percent of a thermoplastic halogenated polymer of one or more types of non-aromatic ethylenically unsaturated hydrocarbons of 2 to 12 carbon atoms, based on the total weight of (A) and (B).

2. The plastic article of Claim 1 wherein the second layer (2) comprises (A) from 75 to 90 weight percent of the vinylidene chloride copolymer and (B) from 25 to 10 weight percent of halogenated polymer of one or more types of non-aromatic ethylenically unsaturated hydrocarbons of 2 to 12 carbon atoms, based on the total weight of (A) and (B).

3. The plastic article of Claim 1 or 2 wherein the copolymer (A) comprises from 80 to 95 weight percent polymerized vinylidene chloride and from 20 to 4 weight percent polymerized alkyl acrylate.

4. The plastic article of any of Claims 1 to 3, wherein the halogenated polymer (B) in layer (2) is a chlorinated homo- or copolymer of ethylene, propylene or 1-butene.

5. The plastic article of Claim 4 wherein the halogenated polymer (B) in layer (2) is a chlorinated ethylene homo- or copolymer having a crystallinity of less than 30 percent, measured according to differential scanning calorimetry, and a melt viscosity between 500 and 2500 Pa·s.

6. The plastic article of Claim 4 or 5 wherein the halogenated polymer (B) in layer (2) comprises at least 80 weight percent polymerized ethylene and up to 20 weight percent polymerized propylene, 1-butene, 2-butene or 1-octene.

7. The plastic article of any of Claims 1 to 6 wherein the thermoplastic vinylidene chloride copolymer (A) comprises from 65 to 91 weight percent polymerized vinylidene chloride and from 35 to 9 weight pecent polymerized vinyl chloride.

7

8. The plastic article of any of Claims 1 to 7 wherein the oxygen permeable material of layer (1) is a polyolefin.

9. The plastic article of Claim 8 wherein the polyolefin is a homopolymer of ethylene, 1-butene or 2-butene, or a copolymer of ethylene or propylene having copolymerized therein an ethylenically unsaturated hydrocarbon of 2 to 8 carbon atoms.

10. The plastic article of Claim 9 wherein the polyolefin is a linear low density polyethylene produced by polymerization of ethylene and up to 20 weight percent 1-octene, 1-hexene, 1-butene or 4-methyl-1-pentene, based on total monomer weight, and having a density of 0.90 to 0.94 g/ml.

11. The plastic article of any of Claims 1 to 9 in the form of a pipe.

12. The plastic article of Claim 11 in the form of a pipe for floor heating.

13. The plastic article of any of Claims 1 to 11 which has been subjected to a cross-linking treatment.

14. The plastic article of any of Claims 1 to 13 which has been subjected to a radiation treatment by gamma rays or electron beams with a dose of 20 to 800 kGy.

15. The plastic article of any of Claims 1 to 9 in the form of a film.

16. The plastic article of any of Claims 1 to 9 in the form of a medical pouch.

17. A process for producing the plastic article of any of Claims 1 to 16 by coextruding at least a first layer (1) of any oxygen permeable plastic material and a second layer (2) comprising (A) from 65 to 85 weight percent of a thermoplastic vinylidene chloride copolymer and (B) from 35 to 5 weight percent of a thermoplastic halogenated polymer of one or more types of non-aromatic ethylenically unsaturated hydrocarbons of 2 to 12 carbon atoms, based on the total weight of (A) and (B).

18. A process for producing the plastic article of any of Claims 1 to 16 by coating or laminating a base plastic article comprising a first layer (1) of an oxygen permeable plastic material with at least a second layer (2) comprising (A) from 65 to 95 weight percent of a thermoplastic vinylidene chloride copolymer and (B) from 35 to 5 weight percent of a thermoplastic halogenated polymer of one or more types of non-aromatic ethylenically unsaturated hydrocarbons of 2 to 12 carbon atoms, based on the total weight of (A) and (B).

19. The process of Claims 17 or 18 wherein the produced plastic article are subjected to a cross-linking treatment.

20. The process of any of Claims 17 to 18 wherein the produced plastic articles are subjected to a radiation treatment by gamma rays or electron beams with a dose of 20 to 800 kGy.

## Patentansprüche

1. Plastikgegenstand aus mindestens zwei Schichten, wobei eine erste Schicht (1) ein sauerstoffdurchlässiges Material ist und eine zweite Schicht (2) enthält (A) von 65 bis 95 Gew.-% eines thermoplastischen vinylidenchloridcopolymer und (B) von 35 bis 5 Gew.-% eines thermoplastischen halogenierten Polymer eines oder mehrerer Typen von nichtaromatischen ethylenisch ungesättigten Kohlenwasserstoffen mit 2 bis 12 Kohlenstoffatomen, jeweils bezogen auf Gesamtgewicht von (A) und (B)

2. Plastikgegenstand nach Anspruch 1, dadurch gekennzeichnet, daß die zweite Schicht (2) enthält (A) von 75 bis 90 Gew.-% des Vinylidenchloridcopolymer und (B) von 25 bis 10 Gew.-% halogeniertes Polymer eines oder mehrerer Typen nichtaromatischer ethylenisch ungesättigter Kohlenwasserstoffe mit 2 bis 12 Kohlenstoffatomen, jeweils bezogen auf Gesamtgewicht von (A) und (B).

3. Plastikgegenstand nach Anspruch 1 oder 2, dadurch gekennzeichnet, daß das Copolymer (A) von 80 bis 95 Gew.-% einpolymerisiertes Vinylidenchlorid und von 20 bis 4 Gew.-% einpolymerisiertes Alkylacrylat enthält.

4. Plastikgegenstand nach jedem der Ansprüche 1 bis 3, dadurch gekennzeichnet, daß das halogenierte Polymer (B) in Schicht (2) ein chloriertes Homo- oder Copolymer von Ethylen, Propylen oder 1-Buten ist.

5. Plastikgegenstand nach Anspruch 4, dadurch gekennzeichnet, daß das halogenierte Polymer (B) in Schicht (2) ein chloriertes Ethylen Homo- oder Copolymer ist mit einer Kristallinität von weniger als 30%, gemessen mit Differentialkalorimetrie, und eine Schmelzviskosität zwischen 500 und 2500 Pa.s aufweist.

6. Plastikgegenstand nach Anspruch 4 oder 5, dadurch gekennzeichnet, daß das halogenierte Polymer (B) in Schicht (2) einpolymerisiert enthält mindestens 80 Gew.-% Ethylen und bis zu 20 Gew.-% Propylen, 1-Buten, 2-Buten oder 1-Octen.

7. Plastikgegenstand nach jedem der Ansprüche 1 bis 6, dadurch gekennzeichnet, daß das thermoplastische Vinylidenchloridcopolymer (A) von 65 bis 91 Gew.-% einpolymerisiertes Vinylidenchlorid und von 35 bis 9 Gew.-% einpolymerisiertes Vinylchlorid enthält.

8. Plastikgegenstand nach jedem der Ansprüche 1 bis 7, dadurch gekennzeichnet, daß das sauerstoffdurchlässige Material von Schicht (1) ein Polyolefin ist.

9. Plastikgegenstand nach Anspruch 8, dadurch gekennzeichnet, daß das Polyolefin ein Homopolymer von Ethylen, 1-Buten oder 2-Buten oder ein Copolymer von Ethylen oder Propylen mit einpolymerisiertem ethylenisch ungesättigten Kohlenwasserstoff mit 2 bis 8 Kohlenstoffatomen ist.

10. Plastikgegenstand nach Anspruch 9, dadurch gekennzeichnet, daß das Polyolefin ein lineares Polyethylen niederer Dichte ist, hergestellt durch Polymerisation von Ethylen und bis zu 20 Gew.-% 1-Octen, 1-Hexen, 1-Buten oder 4-Methyl-1-penten, bezogen auf Gesamtmonomergewicht, und eine Dichte von 0,90 bis 0,94 g/ml aufweist.

11. Plastikgegenstand nach jedem der Ansprüche 1 bis 9, gekennzeichnet durch die Form eines Rohres.

12. Plastikgegenstand nach Anspruch 11, gekennzeichnet durch die Form eines Rohres für Fußbodenheizung.

13. Plastikgegenstand nach jedem der Ansprüche 1 bis 11, dadurch gekennzeichnet, daß er einer Vernetzungsbehandlung unterzogen wurde.

14. Plastikgegenstand nach jedem der Ansprüche 1 bis 13, dadurch gekennzeichnet, daß er einer Strahlenbehandlung mit Gammastrahlen oder Elektronenstrahlen mit einer Dosis von 20 bis 800 kGy unterzogen wurde.

15. Plastikgegenstand nach jedem der Ansprüche 1 bis 9, gekennzeichnet durch die Form einer folie.

16. Plastikgegenstand nach jedem der Ansprüche 1 bis 9, gekennzeichnet durch die Form eines medizinischen Beutels.

17. Verfahren zum Herstellen des Plastikgegenstandes nach jedem der Ansprüche 1 bis 16, gekennzeichnet durch Coextrudieren mindestens einer ersten Schicht (1) eines sauerstoffdurchlässigen Kunststoffmaterials und einer zweiten Schicht (2) enthaltend (A) von 65 bis 95 Gew.-% eines thermoplastischen Vinylidenchloridcopolymer und (B) von 35 bis 5 Gew.-% eines thermoplastischen halogenierten Polymer eines oder mehrerer Typen von nichtaromatischen ethylenisch ungesättigten Kohlenwasserstoffen mit 2 bis 12 Kohlenstoffatomen, jeweils bezogen auf Gesamtgewicht von (A) und (B).

18. Verfahren zum Herstellen des Plastikgegenstandes nach jedem der Ansprüche 1 bis 16, gekennzeichnet durch Beschichten oder Laminieren eines Basisplastikgegenstandes enthaltend eine erste Schicht (1) eines sauerstoffdurchlässigen Plastikmaterials mit mindestens einer zweiten Schicht (2) enthaltend (A) von 65 bis 95 Gew.-% eines thermoplastischen Vinylidenchloridcopolymer und (B) von 35 bis 5 Gew.-% eines thermoplastischen halogenierten Polymer eines oder mehrerer Typen von nichtaromatischen ethylenisch ungesättigten Kohlenwasserstoffen mit 2 bis 12 Kohlenstoffatomen, jeweils bezogen auf Gesamtgewicht von (A) und (B).

19. Verfahren nach Ansprüchen 17 oder 18, dadurch gekennzeichnet, daß der hergestellte Plastikgegenstand einer Vernetzungsbehandlung unterzogen wird.

20. Verfahren nach jedem der Ansprüche 17 bis 18, dadurch gekennzeichnet, daß der hergestellte Plastikgegenstand einer Strahlungsbehandlung mit Gammastrahlen oder Elektronenstrahlen mit einer Dosis von 20 bis 800 kGy unterzogen wird.

## Revendications

1. Article de matière plastique d'au moins deux couches dans lequel une première couche (1) est une matière plastique perméable à l'oxygène et une seconde couche (2) comprend (A) de 65 à 95% en poids d'un copolymère de chlorure de vinylidène thermoplastique et (B) de 35 à 5% en poids d'un polymère halogéné thermoplastique d'un ou plusieures types d'hydrocarbures non-aromatiques à insaturation éthylénique comportant de 2 à 12 atomes de carbone par rapport au poids total de (A) et (B).

2. Article de matière plastique de la revendication 1, dans lequel la seconde couche (2) comprent (A) de 75 à 90% en poids du copolymère de chlorure de vinylidène et (B) de 25 à 10% en poids de polymère halogéné d'un ou plusieurs types d'hydrocarbures à insaturation éthylénique non-aromatiques comportant de 2 à 12 atomes de carbone, par rapport au poids total de (A) et (B).

3. Article de matière plastique de la revendication 1 ou 2 dans lequel le copolymère (A) comprend de 80 à 95% en poids de chlorure de vinylidène polymérisé et de 20 à 4% en poids d'acrylate d'alkyle polymérisé.

4. Article de matière plastique de l'une quelconque des revendications 1 à 3 dans lequel le polymère halogéné (B) dans la couche est un homo- ou copolymère chloré d'éthylène, propylène, ou l-butène.

5. Article de matière plastique de la revendication 4 dans lequel de polymère halogéné (B) dans la couche (2) est un homo- ou copolymère d'éthylène chloré ayant une cristallinité inférieure à 30%, mesurée par calorimétrie à balayage différentiel, et une viscosité à chaud comprise entre 500 et 2 500 Pa.s.

6. Article de matière plastique de la revendication 4 ou 5 dans lequel le polymère halogéné (B) dans la couche (2) comprend au moins 80% en poids d'éthylène polymérisé et jusqu'à 20% en poids de propylène, 1-butène, 2-butène ou 1-octène polymérisé.

7. Article de matière plastique de l'une quelconque des revendications 1 à 6 dans lequel le copolymère de chlorure de vinylidène thermoplastique (A) comprend de 65 à 91% en poids de chlorure de vinylidène polymérisé et de 35 à 9% en poids de chlorure de vinyle polymérisé.

8. Article de matière plastique de l'une quelconque des revendications 1 à 7 dans lequel la matière perméable à l'oxygène de la couche (1) est une polyoléfine.

9. Article de matière plastique de la revendication 8 dans lequel la polyoléfine est un homopolymère d'éthylène, 1-butène ou 2-butène, ou un copolymère d'éthylène ou de propylène dans lequel se trouve copolymérisé un hydrocarbure à insaturation éthylénique comportant de 2 à 8 atomes de carbone.

10. Article de matière plastique de la revendication 9 dans lequel la polyoléfine est un polyéthylène basse densité linéaire, produit par polymérisation d'éthylène et de jusqu'à 20% en poids de 1-octène, 1-hexène, 1-butène ou 4-méthyl-1-pentène, par rapport au poids total de monomères, et ayant une densité de 0,90 à 0,94 g/ml.

11. Article de matière plastique de l'une quelconque des revendications 1 à 9 sous la forme d'une canalisation.

9

12. Article de matière plastique de la revendication 11 sous la forme d'une canalisation pour chauffage au sol.

13. Article de matière plastique de l'une quelconque des revendications 1 à 11 qui a été soumis à un traitement de réticulation.

14. Article de matière plastique de l'une quelconque des revendications 1 à 13 qui a été soumis à un traitement d'irradiation par des rayons gamma ou des faisceaux d'électrons avec une dose de 20 à 800 kGy.

15. Article de matière plastique de l'une quelconque des revendications 1 à 9 sous la forme d'un film.

16. Article de matière plastique de l'une quelconque des revendications 1 à 9 sous la forme d'une poche médicale.

17. Procédé pour produire l'article de matière plastique de l'une quelconque des revendications 1 à 16 pour coextrusion d'au moins une première couche (1) de n'importe quelle matière plastique perméable à l'oxygène et d'une seconde couche (2) comprenant (A) de 65 à 95% en poids d'un copolymère de chlorure de vinylidène thermoplastique et (B) de 35 à 5% en poids d'une polymère halogéné thermoplastique d'un ou plusieurs types d'hydrocarbures non-aromatiques à insaturation éthylénique comportant de 2 à 12 atomes de carbone, par rapport au poids total de (A) et (B).

18. Procédé pour produire l'article de matière plastique de l'une quelconque des revendications 1 à 16 par revêtement ou stratification d'un article de matière plastique de base comprenant une première couche (1) d'une matière plastique perméable à l'oxygène avec au moins une seconde couche (2) comprenant (A) de 65 à 95% en poids d'une copolymère de chlorure de vinylidène thermoplastique et (B) de 35 à 5% en poids d'un polymère halogéné thermoplastique d'un ou plusieurs types d'hydrocarbures non-aromatiques à insaturation éthylénique comportant de 2 à 12 atomes de carbone, par rapport au poids total de (A) et (B).

19. Procédé des revendications 17 ou 18 dans lequel l'article de matière plastique produit est soumis à un traitement de réticulation.

20. Procédé de l'une quelconque des revendications 17 à 18 dans lequel els articles de matière plastique produits sont soumis à un traitement d'irradiation par des rayons gamma ou des faisceaux d'électrons avec une dose de 20 à 800 kGy.